# FASCICULE DE BREVET EUROPEEN

(11) **EP 0 778 632 B1**
(45) Date de publication et mention de la délivrance du brevet: **17.10.2001**
(21) Numéro de dépôt: 96402521.7
(22) Date de dépôt: 22.11.1996
(51) Int. Cl.: H01Q 1/28, H01Q 21/00, G01S 13/88, G01S 13/02

(54) **Radioaltimètre protégé contre diverses détections**
Gegen verschiedene Entdeckungen geschützter Funkhöhenmesser
Radio altimeter protected against various detections

(30) Priorité: 04.12.1995 FR 9514289
(43) Date de publication de la demande: 11.06.1997
(73) Titulaire: AEROSPATIALE MATRA, 75016 Paris (FR)
(72) Inventeur: Dalle, Michel, 92140 Clamart (FR); Pouit, Christian, 92500 Rueil-Malmaison (FR)
(74) Mandataire: Bonnetat, Christian

(56) Documents cités:
- EP-A- 0 170 557
- EP-A- 0 250 082
- EP-A- 0 322 005
- EP-A- 0 642 190
- DE-A- 3 500 383
- GB-A- 1 430 338

## Description

La présente invention concerne un radioaltimètre pouvant être très difficilement détecté au moyen de systèmes de détection divers connus, comme par exemple des radars, des détecteurs de rayonnement infrarouge et/ou des détecteurs d'émissions radioélectriques.

Bien que non exclusivement, la présente invention concerne plus particulièrement des radioaltimètres montés sur des aéronefs, par exemple des avions de chasse ou des missiles, qui cherchent à ne pas être repérés au cours de leur vol.

On sait que les ondes électromagnétiques émises par un radioaltimètre, pour mesurer l'altitude de l'aéronef porteur dudit radioaltimètre, peuvent être détectées, à distance, par des systèmes de détection appropriés, utilisés notamment dans le domaine militaire, et permettant de repérer ledit aéronef.

En outre, les antennes d'émission et de réception d'un tel radioaltimètre augmentent la surface sensible à la détection radar dudit aéronef, ce qui augmente donc le risque de détection par radar de l'aéronef.

De plus, lesdites antennes d'émission et de réception, en raison de leur surface relativement importante, peuvent être détectées par des détecteurs de rayonnement infrarouge.

Par conséquent, de tels radioaltimètres augmentent sensiblement le risque de détection de l'aéronef, par divers moyens de détection connus, tels que ceux précités.

La présente invention a pour objet de remédier à ces inconvénients. Elle concerne un radioaltimètre qui est difficilement détectable par des moyens de détection connus et qui n'augmente donc pas le risque de détection de l'aéronef, notamment lors du fonctionnement dudit radioaltimètre.

A cet effet, selon l'invention, ledit radioaltimètre monté sur un aéronef et comportant :
- une tête hyperfréquence susceptible d'émettre et de recevoir des ondes électromagnétiques à hyperfréquence ;
- une antenne d'émission susceptible d'assurer l'émission vers la terre d'une onde électromagnétique émise par ladite tête hyperfréquence ;
- une antenne de réception susceptible d'assurer la réception d'une onde électromagnétique émise par ladite antenne d'émission et renvoyée par la terre, et de l'adresser à ladite tête hyperfréquence ; et
- une unité de calcul susceptible de déterminer, à partir de données reçues de ladite tête hyperfréquence, l'altitude dudit aéronef,
est remarquable en ce que ladite tête hyperfréquence est réalisée de manière à émettre et à recevoir des ondes électromagnétiques présentant une fréquence comprise entre 55 GHz et 65 GHz, et en ce que lesdites antennes d'émission et de réception sont du type à fentes et sont intégrées dans la structure dudit aéronef.

Ainsi, grâce à l'invention, ledit radioaltimètre est protégé efficacement :
- d'une part, contre une détection au moyen d'un détecteur d'émissions radioélectriques, puisque de façon connue une onde électromagnétique, dont la fréquence est comprise entre 55 GHz et 65 GHz, est atténuée par l'oxygène de l'air, à savoir :
   - modérément sur quelques centaines de mètres, ce qui est suffisant pour permettre le fonctionnement normal du radioaltimètre ; mais
   - très fortement, pour des distances de propagation supérieures à quelques kilomètres, de manière à ne pas pouvoir être détectée par des détecteurs d'émissions radioélectriques, situés à de telles distances ; et
- d'autre part, contre des détecteurs de rayonnement infrarouge, puisqu'en raison de la fréquence utilisée (de l'ordre de 60 GHz), les antennes peuvent être réalisées selon des dimensions réduites, ce qui les rend pratiquement indétectables par de tels détecteurs.

De plus, de façon avantageuse, les antennes à fentes se comportent comme une facette plane, métallique et lisse pour tous les rayonnements présentant une fréquence située en dehors de la bande de fonctionnement, ce qui permet d'obtenir de bonnes qualités de furtivité pour les antennes montées sur l'aéronef.

Par ailleurs, lorsque l'aéronef est protégé contre des détections radar au moyen d'un revêtement externe absorbant qui recouvre la structure de l'aéronef et qui est susceptible d'absorber des ondes électromagnétiques, de façon avantageuse, lesdites antennes d'émission et de réception sont intégrées dans ledit revêtement absorbant.

Ainsi, au contraire des radioaltimètres connus, le radioaltimètre conforme à l'invention n'augmente pas le risque de détection de l'aéronef par un radar, puisque la protection conférée par le revêtement absorbant n'est pas altérée.

Dans un mode de réalisation avantageux de l'invention, chacune desdites antennes d'émission et de réception comporte un guide d'ondes métallique intégré dans la structure de l'aéronef, la face dudit guide d'ondes située vers l'extérieur étant munie desdites fentes, et l'une des extrémités dudit guide d'ondes étant courbée vers l'intérieur de l'aéronef et reliée à ladite tête hyperfréquence.

De plus, avantageusement, l'extrémité dudit guide d'ondes, opposée à la tête hyperfréquence, est munie :
- soit d'une charge adaptée, ce qui permet d'obtenir de bonnes performances en bande passante ;
- soit d'un court-circuit, ce qui permet d'optimiser l'efficacité de rayonnement dans une bande passante plus faible.

Pour réduire la surface du radioaltimètre sensible à la détection radar, de façon avantageuse, les tronçons des deux guides d'ondes, munis desdites fentes, sont montés de façon sensiblement colinéaire.

Par ailleurs, pour chacune desdites antennes, de façon avantageuse, lesdites fentes sont pratiquées, par exemple par photolithographie, dans une feuille métallique fixée sur le guide d'ondes correspondant, de préférence par soudage.

Pour assurer l'étanchéité des antennes, avantageusement, lesdites fentes sont recouvertes d'un film étanche, réalisé en une matière, par exemple du tétrafluoroéthylène, laissant passer les ondes électromagnétiques de fréquence comprise entre 55 GHz et 65 GHz.

Par ailleurs, dans un mode de réalisation particulièrement avantageux de l'invention, lesdites antennes d'émission et de réception sont agencées dans une pièce d'assemblage commune montée dans la structure de l'aéronef.

En outre, ladite pièce d'assemblage comporte sur sa face externe, de part et d'autre desdits guides d'ondes, des cannelures rectilignes usinées dans ladite pièce d'assemblage, lesdites cannelures permettant d'amortir le courant susceptible d'être induit par les ondes électromagnétiques émises et/ou reçues.

De préférence, dans la zone de montage de la pièce d'assemblage, le revêtement absorbant est ôté et remplacé par une trappe amovible, réalisée dans le même matériau que ledit revêtement absorbant et pourvue d'une ouverture pour l'émission et la réception d'ondes électromagnétiques au moyen desdites antennes d'émission et de réception.

De plus, pour ne pas gêner la propagation des ondes électromagnétiques, tout en préservant ses bonnes qualités d'absorption des ondes électromagnétiques, de façon avantageuse, ladite trappe présente, sur le bord de ladite ouverture, des biseaux adaptés aux directions extrêmes d'émission et de réception d'ondes électromagnétiques desdites antennes d'émission et de réception.

Les figures du dessin annexé feront bien comprendre comment l'invention peut être réalisée. Sur ces figures, des références identiques désignent des éléments semblables.

La figure 1 est une représentation schématique d'un radioaltimètre conforme à l'invention, présentant son principe de fonctionnement.

La figure 2 illustre des fentes d'une antenne du radioaltimètre conforme à l'invention, pratiquées dans une feuille métallique mince partiellement représentée.

La figure 3 est une vue en plan d'une pièce d'assemblage utilisée pour monter les antennes du radioaltimètre dans la structure d'un aéronef porteur dudit radioaltimètre.

La figure 4 est une coupe longitudinale de la pièce d'assemblage, selon la ligne IV-IV de la figure 3.

La figure 5 est une coupe transversale de la pièce d'assemblage, selon la ligne V-V de la figure 3.

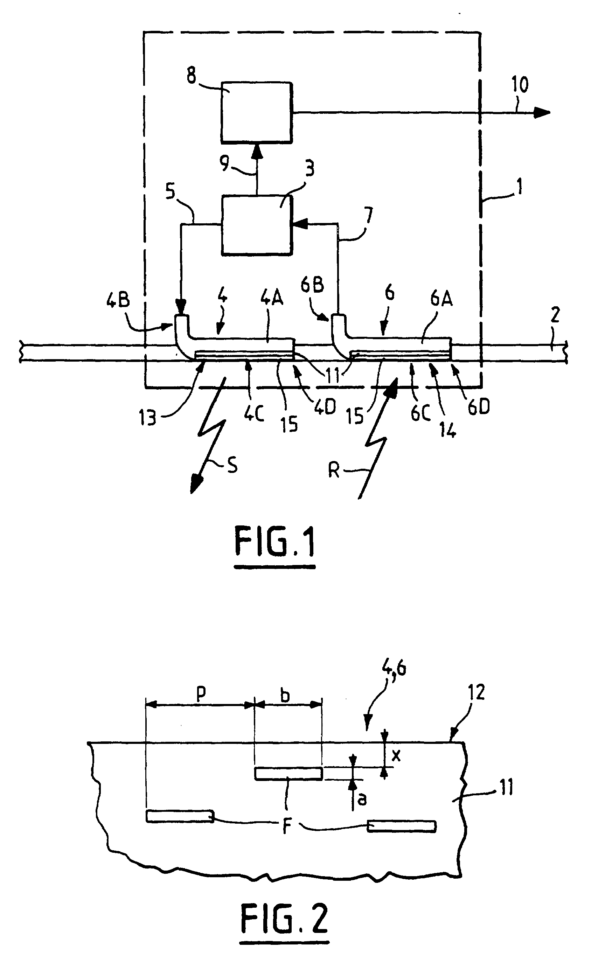

Le radioaltimètre 1 conforme à l'invention et représenté schématiquement sur la figure 1 est monté sur un aéronef, dont on a uniquement représenté une partie de la structure 2, pour mesurer l'altitude dudit aéronef.

De façon connue, ledit radioaltimètre 1 comporte :
- une tête hyperfréquence 3 susceptible d'émettre et de recevoir des ondes électromagnétiques à hyperfréquence ;
- une antenne d'émission 4 reliée à la tête hyperfréquence 3, comme indiqué par une liaison 5, et susceptible d'assurer l'émission vers la terre (non représentée) d'une onde électromagnétique S émise par ladite tête hyperfréquence 3 ;
- une antenne de réception 6 susceptible d'assurer la réception d'une onde électromagnétique R correspondant à l'onde électromagnétique S émise par l'antenne d'émission 4 et renvoyée par la terre, et de l'adresser à ladite tête hyperfréquence 3, comme indiqué par une liaison 7 ; et
- une unité de calcul 8 susceptible de déterminer, à partir de données reçues de ladite tête hyperfréquence 3 par une liaison 9, l'altitude de l'aéronef et de la transmettre à un dispositif utilisateur non représenté par une liaison 10.

Les radioaltimètres connus présentent l'inconvénient de rendre les aéronefs porteurs de tels radioaltimètres plus facilement détectables, notamment :
- par des détecteurs d'émissions radioélectriques susceptibles de capter les ondes électromagnétiques émises par les radioaltimètres ; et
- par des détecteurs de rayonnement infrarouge susceptibles, en particulier, de détecter les antennes d'émission et de réception desdits radioaltimètres.

Le radioaltimètre 1 conforme à l'invention est notamment destiné à remédier à ces inconvénients.

A cet effet, ledit radioaltimètre 1 est remarquable, selon l'invention, en ce que :
- ladite tête hyperfréquence 3 est réalisée de manière à émettre et à recevoir des ondes électromagnétiques S et R présentant une fréquence comprise entre 55 GHz et 65 GHz ; et
- lesdites antennes d'émission et de réception 4 et 6 sont du type à fentes F et sont intégrées dans la structure 2 de l'aéronef, comme représenté notamment sur la figure 1.

De façon connue, une onde électromagnétique présentant une fréquence de l'ordre de 60 GHz est :
- d'une part, très fortement atténuée par l'atmosphère au-delà de quelques kilomètres, de sorte que les ondes électromagnétiques S émises par le radioaltimètre 1 conforme à l'invention ne sont pas détectées par des détecteurs d'émissions radioélectriques, situés à de telles distances de l'aéronef ; et
- d'autre part, modérément atténuée par l'atmosphère pour une distance de quelques centaines de mètres de sorte que le radioaltimètre 1 peut fonctionner normalement à une fréquence de l'ordre de 60 GHz, pour une altitude de l'aéronef correspondant à une telle distance.

De plus, en raison de cette fréquence élevée utilisée, les antennes d'émission et de réception 4 et 6, et notamment les fentes F de ces antennes 4 et 6, peuvent être réalisées selon des dimensions réduites, ce qui les rend pratiquement indétectables par des détecteurs de rayonnement infrarouge et électromagnétiques.

Les antennes à fentes sont connues pour leur qualité de rayonnement. Elles possèdent par ailleurs de bonnes qualités en furtivité par le fait qu'elles se comportent comme une facette plane, métallique et lisse pour les rayonnements présentant des fréquences situées en dehors de la bande de fonctionnement.

Les dimensions et le nombre desdites fentes F, qui sont pratiquées dans une feuille métallique mince 11 partiellement représentée sur la figure 2, sont définis, par calcul et/ou par des essais de mise au point, de manière à obtenir des performances optimales pour le fonctionnement du radioaltimètre 1, notamment en ce qui concerne :
- la fréquence de fonctionnement ;
- le gain de directivité en rayonnement, qui dépend de l'ouverture angulaire du faisceau d'ondes émises S ;
- l'impédance du rayonnement ;
- l'efficacité du rayonnement ; et
- le découplage entre l'antenne d'émission 4 et l'antenne de réception 6.

Pour ce faire, on choisit des dimensions appropriées pour les caractéristiques suivantes des fentes F :
- la largeur a des fentes F,
- la longueur b des fentes F,
- la distance x entre un bord 12 de la feuille mince 11 et la fente F la plus proche de ce bord 12, et
- la distance p entre les extrémités longitudinales respectivement de deux fentes adjacentes,
en sachant que :
- la largeur a règle essentiellement l'impédance du rayonnement émis,
- la longueur b règle essentiellement la fréquence de résonance,
- la distance x règle essentiellement le couplage au guide d'ondes de l'antenne, précisé ci-dessous, et
- la distance p règle essentiellement l'ouverture angulaire du faisceau d'ondes émises S.

Selon l'invention, lesdites fentes F sont gravées, par exemple par photolithographie, dans ladite feuille métallique mince 11.

Cette feuille métallique mince 11 est fixée, à chaque fois, sur la face externe 13 ou 14 de l'antenne 4 ou 6 qui est réalisée sous forme d'un guide d'ondes 4A, 6A.

Ledit guide d'ondes 4A ou 6A présente :
- une extrémité coudée 4B ou 6B, courbée vers l'intérieur et raccordée à la tête hyperfréquence 3 ; et
- un tronçon 4C ou 6C sensiblement rectiligne, monté dans la structure 2 de l'aéronef et destiné à recevoir la feuille métallique 11.

De plus, l'extrémité 4D ou 6D du guide d'ondes 4A ou 6A, opposée à ladite extrémité coudée 4B ou 6B, peut être munie :
- soit d'une charge adaptée, pour obtenir de bonnes performances en bande passante ;
- soit d'un court-circuit, pour optimiser l'efficacité du rayonnement dans une bande passante plus faible.

Une partie de la face 13 ou 14 du guide d'ondes 4A ou 6A est usinée. La feuille métallique mince 11 est positionnée sur ladite partie usinée, par exemple au moyen de pions non représentés du guide d'ondes qui coopèrent avec des trous également non représentés de la feuille 11, et elle est rendue solidaire du guide d'ondes, par exemple par soudure à l'étain dans un four.

Pour assurer l'étanchéité des antennes 4 et 6 ainsi réalisées, on dépose, sur la face externe de la feuille mince 11, un film étanche 15 réalisé en une matière, par exemple du tétrafluoroéthylène, laissant passer les ondes électromagnétiques présentant une fréquence de l'ordre de 60 GHz.

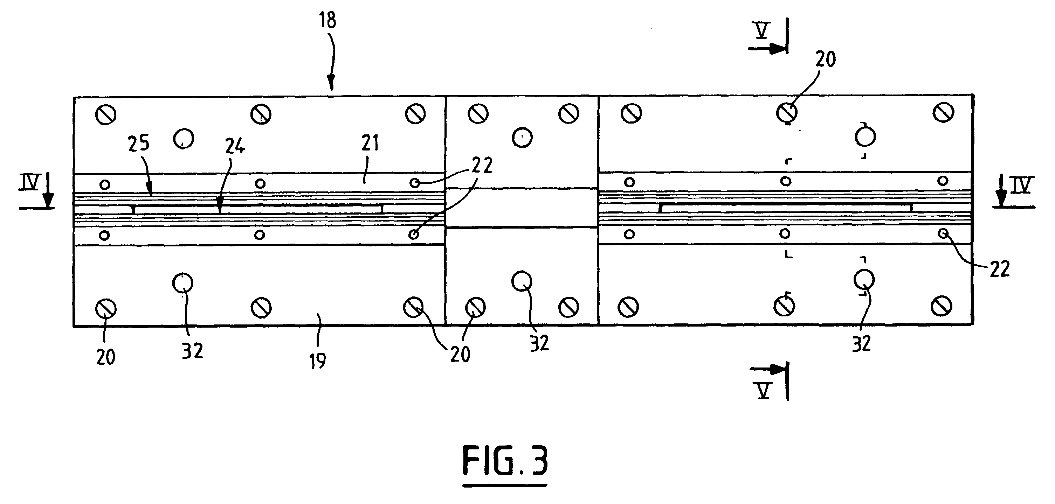

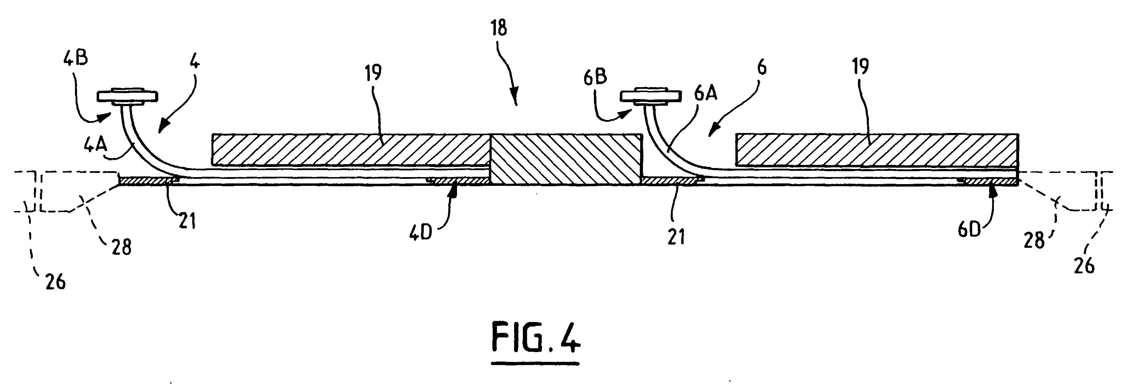

Par ailleurs, les deux antennes 4 et 6 sont agencées dans une pièce d'assemblage 18 représentée sur les figures 3 à 5 et montée dans la structure 2 de l'aéronef.

Cette pièce d'assemblage 18 permet, d'une part, de réaliser un positionnement optimal des deux antennes 4 et 6 et, d'autre part, de réduire des courants électriques susceptibles d'être induits à proximité des antennes 4 et 6 par les rayonnements émis et reçus S et R, comme indiqué ci-dessous.

De plus, les tronçons 4C et 6C des antennes 4 et 6 sont agencés de façon sensiblement colinéaire dans ladite pièce d'assemblage 18, ce qui permet de réduire, d'une part, la surface sensible à une détection radar vers l'avant de l'aéronef et, d'autre part, le couplage parasite entre lesdites antennes 4 et 6.

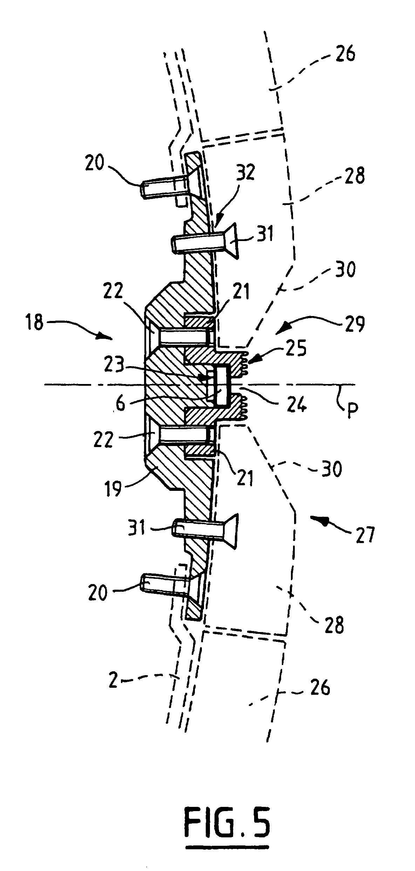

Comme on peut notamment le voir sur la figure 5, ladite pièce d'assemblage 18 qui est symétrique suivant un plan longitudinal central P, comporte :
- une pièce de fond 19, de forme rectangulaire en plan, qui est fixée sur la structure 2 de l'aéronef au moyen de vis 20 ; et
- une pièce de recouvrement 21, également de forme rectangulaire en plan, qui est fixée au moyen de vis 22, au centre, sur ladite pièce de fond 19, de manière à former un logement 23 pour les tronçons 4C et 6C des antennes 4 et 6.

Ladite pièce de recouvrement 21 présente une ouverture centrale 24 permettant l'émission et la réception d'ondes électromagnétiques.

De plus, elle comporte, de part et d'autre de cette ouverture centrale 24, des cannelures rectilignes 25 directement usinées dans cette pièce de recouvrement 21, parallèlement au plan P.

Selon l'invention, les dimensions de ces cannelures rectilignes 25 sont définies de façon connue, par calcul et/ou par des essais, de manière à optimiser l'efficacité du rayonnement émis et la forme du diagramme de rayonnement, transversalement aux antennes 4 et 6.

Ces cannelures 25 permettent, de plus, de réduire des courants électriques qui sont induits dans la pièce de recouvrement 21 par les rayonnements émis et reçus S et R, pour éviter une propagation de ces courants électriques notamment dans un revêtement externe 26 lorsque l'aéronef est muni d'un tel revêtement.

De façon connue, pour réduire le risque de détection de l'aéronef au moyen d'un radar, on recouvre généralement la structure 2 de l'aéronef, d'un revêtement externe absorbant 26 représenté en traits interrompus, qui est susceptible d'absorber les ondes électromagnétiques utilisées par des radars.

Selon l'invention, les antennes 4 et 6 sont intégrées dans ledit revêtement absorbant 26, ce qui les rend difficilement détectables par un radar.

Pour ce faire, dans la zone 27 de montage de la pièce d'assemblage 18 dans la structure de l'aéronef, le revêtement absorbant 26 est ôté et remplacé par une trappe 28, de forme rectangulaire, légèrement supérieure à la forme rectangulaire de la pièce d'assemblage 18, réalisée dans le même matériau que ledit revêtement absorbant 26, et recouvrant ladite pièce d'assemblage 18.

Les faces externes du revêtement absorbant 26 et de la trappe 28 sont agencées à fleur de peau et la jonction entre ces deux éléments est réalisée avec un jeu minimal.

On remarquera que l'intégration des antennes 4 et 6 dans le revêtement absorbant permet notamment de réduire les échos radar susceptibles d'être engendrés par les bords 12 de la feuille métallique 11 munie des fentes F. Ce mode de réalisation est particulièrement avantageux pour un aéronef volant à basse altitude, puisque le radioaltimètre 1 émet alors des ondes à la verticale et les radars de détection sont situés dans des directions proches de l'horizontale.

Ladite trappe 28 présente une ouverture centrale 29 pour permettre l'émission et la réception d'ondes électromagnétiques.

De plus, les bords de ladite ouverture centrale 29 présentent des biseaux 30, dont l'inclinaison est adaptée aux directions extrêmes d'émission et de réception d'ondes électromagnétiques, au moyen desdites antennes 4 et 6.

La trappe 28 est fixée sur la pièce d'assemblage 18 par des vis 31 intégrées dans ladite trappe 28 et traversant des trous 32 prévus dans ladite pièce d'assemblage 18.

La trappe 28 est donc montée de l'extérieur, ce qui facilite l'intégration mécanique et électrique des antennes 4 et 6 sur le radioaltimètre 1 situé à l'intérieur de l'aéronef.

## Revendications

1. Radioaltimètre monté sur un aéronef et comportant :
- une tête hyperfréquence (3) susceptible d'émettre et de recevoir des ondes électromagnétiques à hyperfréquence ;
- une antenne d'émission (4) susceptible d'assurer l'émission vers la terre d'une onde électromagnétique (S) émise par ladite tête hyperfréquence (3) ;
- une antenne de réception (6) susceptible d'assurer la réception d'une onde électromagnétique (R) émise par ladite antenne d'émission (4) et renvoyée par la terre, et de l'adresser à ladite tête hyperfréquence (3) ; et
- une unité de calcul (8) susceptible de déterminer, à partir de données reçues de ladite tête hyperfréquence (3), l'altitude dudit aéronef,
**caractérisé en ce que** ladite tête hyperfréquence (3) est réalisée de manière à émettre et à recevoir des ondes électromagnétiques présentant une fréquence comprise entre 55 GHz et 65 GHz, et **en ce que** lesdites antennes d'émission et de réception (4, 6) sont du type à fentes (F) et sont intégrées dans la structure (2) dudit aéronef.

2. Radioaltimètre selon la revendication 1, pour un aéronef comportant un revêtement externe absorbant (26) qui recouvre la structure (2) de l'aéronef et qui est susceptible d'absorber des ondes électromagnétiques,
**caractérisé en ce que** lesdites antennes d'émission et de réception (4, 6) sont intégrées dans ledit revêtement absorbant.

3. Radioaltimètre selon l'une des revendications 1 ou 2,
**caractérisé en ce que** chacune desdites antennes d'émission et de réception (4, 6) comporte un guide d'ondes métallique (4A, 6A) intégré dans la structure (2) de l'aéronef, la face (13, 14) dudit guide d'ondes (4A, 6A) située vers l'extérieur étant munie desdites fentes (F), et l'une des extrémités (4B, 6B) dudit guide d'ondes (4A, 6A) étant courbée vers l'intérieur de l'aéronef et reliée à ladite tête hyperfréquence (3).

4. Radioaltimètre selon la revendication 3,
**caractérisé en ce que** l'extrémité (4D, 6D) dudit guide d'ondes (4A, 6A), opposée à la tête hyperfréquence (3), est munie d'une charge adaptée.

5. Radioaltimètre selon la revendication 3,
**caractérisé en ce que** l'extrémité (4D, 6D) dudit guide d'ondes (4A, 6A), opposée à la tête hyperfréquence (3), est munie d'un court-circuit.

6. Radioaltimètre selon l'une des revendications 3 à 5,
**caractérisé en ce que** les tronçons (4C, 6C) des deux guides d'ondes (4A, 6A), munis desdites fentes (F), sont montés de façon sensiblement colinéaire.

7. Radioaltimètre selon l'une des revendications 3 à 6,
**caractérisé en ce que** pour chacune desdites antennes (4, 6), lesdites fentes (F) sont pratiquées dans une feuille métallique (11) fixée sur le guide d'ondes correspondant (4A, 6A).

8. Radioaltimètre selon la revendication 7,
**caractérisé en ce que** lesdites fentes (F) sont pratiquées par photolithographie.

9. Radioaltimètre selon l'une des revendications 7 ou 8,
**caractérisé en ce que** ladite feuille métallique (11) est soudée sur ledit guide d'ondes (4A, 6A).

10. Radioaltimètre selon l'une quelconque des revendications 1 à 9,
**caractérisé en ce que** lesdites fentes (F) sont recouvertes d'un film étanche (15), réalisé en une matière laissant passer les ondes électromagnétiques de fréquence comprise entre 55 GHz et 65 GHz.

11. Radioaltimètre selon la revendication 10,
**caractérisé en ce que** ledit film étanche (15) est en tétrafluoroéthylène.

12. Radioaltimètre selon l'une quelconque des revendications précédentes,
**caractérisé en ce que** lesdites antennes d'émission et de réception (4, 6) sont agencées dans une pièce d'assemblage commune (18) montée dans la structure (2) de l'aéronef.

13. Radioaltimètre selon les revendications 3 et 12,
**caractérisé en ce que** ladite pièce d'assemblage (18) comporte sur sa face externe, de part et d'autre desdits guides d'ondes (4A, 6A), des cannelures rectilignes (25) usinées dans ladite pièce d'assemblage (18).

14. Radioaltimètre selon les revendications 2 et 12,
**caractérisé en ce que**, dans la zone de montage (27) de la pièce d'assemblage (18), le revêtement absorbant (26) est ôté et remplacé par une trappe amovible (28), réalisée dans la même matière que ledit revêtement absorbant (26) et pourvue d'une ouverture (29) pour l'émission et la réception d'ondes électromagnétiques au moyen desdites antennes d'émission et de réception (4, 6).

15. Radioaltimètre selon la revendication 14,
**caractérisée en ce que** ladite trappe (28) présente, sur le bord de l'ouverture (29), des biseaux (30) adaptés aux directions extrêmes d'émission et de réception d'ondes électromagnétiques desdites antennes d'émission et de réception (4, 6).

16. Radioaltimètre selon l'une quelconque des revendications précédentes,
**caractérisé en ce que** lesdites antennes d'émission et de réception (4, 6) à fentes (F) se comportent comme une facette plane, métallique et lisse pour les rayonnements présentant des fréquences situées en dehors de la bande de fonctionnement.

## Patentansprüche

1. An einem Flugzeug montierter Funkhöhenmesser, der folgendes umfasst:
- einen Hyperfrequenzkopf (3), der elektromagnetische Hyperfrequenzwellen aussenden und empfangen kann;
- eine Sendeantenne (4), die die Aussendung einer vom genannten Hyperfrequenzkopf (3) ausgesendeten elektromagnetischen Welle (S) zur Erde gewährleisten kann;
- eine Empfangsantenne (6), die den Empfang einer von der genannten Sendeantenne (4) ausgesendeten und von der Erde zurückgesendeten elektromagnetischen Welle (R) und deren Sendung an den genannten Hyperfrequenzkopf (3) gewährleisten kann; und
- eine Recheneinheit (8), die ausgehend von vom genannten Hyperfrequenzkopf (3) erhaltenen Daten die Höhe des genannten Flugzeugs ermitteln kann,
**dadurch gekennzeichnet, dass** der genannte Hyperfrequenzkopf (3) so ausgeführt ist, dass er elektromagnetische Wellen mit einer Frequenz zwischen 55 GHz und 65 GHz aussenden und empfangen kann, und dass die genannten Sende- und Empfangsantennen (4, 6) mit Schlitzen (F) ausgestattet und in der Struktur (2) des genannten Flugzeugs integriert sind.

2. Funkhöhenmesser nach Anspruch 1 für ein Flugzeug, das eine absorbierende Außenbeschichtung (26) besitzt, die die Struktur (2) des Flugzeugs bedeckt und die elektromagnetische Wellen absorbieren kann,
**dadurch gekennzeichnet, dass** die genannte Sende- und Empfangsantenne (4, 6) in die genannte absorbierende Beschichtung integriert sind.

3. Funkhöhenmesser nach einem der Ansprüche 1 oder 2,
**dadurch gekennzeichnet, dass** jede der genannten Sende- und Empfangsantennen (4, 6) einen Wellenleiter aus Metall (4A, 6A) umfasst, der in der Struktur (2) des Flugzeugs integriert ist, wobei die Seite (13, 14) des genannten Wellenleiters (4A, 6A), die nach außen hin liegt, mit den genannten Schlitzen (F) versehen ist und eines der Enden (4B, 6B) des genannten Wellenleiters (4A, 6A) in das Innere des Flugzeugs gebogen und mit dem genannten Hyperfrequenzkopf (3) verbunden ist.

4. Funkhöhenmesser nach Anspruch 3,
**dadurch gekennzeichnet, dass** das Ende (4D, 6D) des genannten Wellenleiters (4A, 6A), das dem Hyperfrequenzkopf (3) gegenüberliegt, mit einer angepassten Ladung versehen ist.

5. Funkhöhenmesser nach Anspruch 3,
**dadurch gekennzeichnet, dass** das Ende (4D, 6D) des genannten Wellenleiters (4A, 6A), das dem Hyperfrequenzkopf (3) gegenüberliegt, mit einem Kurzschluss versehen ist.

6. Funkhöhenmesser nach einem der Ansprüche 3 bis 5,
**dadurch gekennzeichnet, dass** die Teilstücke (4C, 6C) der beiden Wellenleiter (4A, 6A), die mit den genannten Schlitzen (F) versehen sind, im wesentlichen kolinear montiert sind.

7. Funkhöhenmesser nach einem der Ansprüche 3 bis 6,
**dadurch gekennzeichnet, dass** für jede der genannten Antennen (4, 6) die genannten Schlitze (F) in einer Metallfolie (11) ausgeführt sind, die auf dem entsprechenden Wellenleiter (4A, 6A) befestigt ist.

8. Funkhöhenmesser nach Anspruch 7,
**dadurch gekennzeichnet, dass** die genannten Schlitze (F) durch Fotolithografie ausgeführt werden.

9. Funkhöhenmesser nach einem der Ansprüche 7 oder 8,
**dadurch gekennzeichnet, dass** die genannte Metallfolie (11) auf den genannten Wellenleiter (4A, 6A) aufgeschweißt ist.

10. Funkhöhenmesser nach einem beliebigen der Ansprüche 1 bis 9,
**dadurch gekennzeichnet, dass** die genannten Schlitze (F) mit einem dichten Film (15) bedeckt sind, der aus einem Material hergestellt ist, das elektromagnetische Wellen mit einer Frequenz zwischen 55 GHz und 65 GHz passieren lässt.

11. Funkhöhenmesser nach Anspruch 10,
**dadurch gekennzeichnet, dass** der genannte dichte Film (15) aus Tetrafluorethylen besteht.

12. Funkhöhenmesser nach einem beliebigen der vorstehenden Ansprüche,
**dadurch gekennzeichnet, dass** die genannten Sende- und Empfangsantennen (4, 6) in einem gemeinsamen Anschlussstück (18) angeordnet sind, das in der Struktur (2) des Flugzeugs montiert ist.

13. Funkhöhenmesser nach den Ansprüchen 3 und 12,
**dadurch gekennzeichnet, dass** das genannte Anschlussstück (18) auf seiner Außenfläche zu beiden Seiten der genannten Wellenleiter (4A, 6A) in das genannte Anschlussstück (18) eingearbeitete gerade Rillen (25) besitzt.

14. Funkhöhenmesser nach den Ansprüchen 2 und 12,
**dadurch gekennzeichnet, dass** die absorbierende Beschichtung (26) im Montagebereich (27) des Anschlusstücks (18) entfernt und durch eine abnehmbare Klappe (28) ersetzt wird, die aus demselben Material hergestellt ist wie die genannte absorbierende Beschichtung (26) und mit einer Öffnung (29) zum Senden und Empfangen elektromagnetischer Wellen mittels der genannten Sende- und Empfangsantennen (4, 6) versehen ist.

15. Funkhöhenmesser nach Anspruch 14,
**dadurch gekennzeichnet, dass** die genannte Klappe (28) an der Kante der Öffnung (29) Abschrägungen (30) aufweist, die an die Grenzsende- und Empfangsrichtungen elektromagnetischer Wellen der genannten Sende- und Empfangsantennen (4,6) angepasst sind.

16. Funkhöhenmesser nach einem beliebigen der vorstehenden Ansprüche,
**dadurch gekennzeichnet, dass** sich die genannten Sende- und Empfangsantennen (4, 6) mit Schlitzen (F) wie eine flache, glatte metallische Facette bei Strahlungen verhalten, die Frequenzen besitzen, die außerhalb des Betriebsbereichs liegen.

## Claims

1. Radio altimeter mounted on an aircraft and including:
- a UHF head (3) capable of transmitting and receiving electromagnetic waves at UHF;
- a transmitting antenna (4) capable of transmitting, towards the ground, an electromagnetic wave (S) transmitted by the said UHF head (3) ;
- a receiving antenna (6) capable of receiving an electromagnetic wave (R) transmitted by the said transmitting antenna (4) and reflected by the ground, and of forwarding it to the said UHF head (3); and
- a calculating unit (8) capable of determining the altitude of the said aircraft, on the basis of data received from the said UHF head (3),
**characterized in that** the said UHF head (3) is produced so as to transmit and to receive UHF waves having a frequency lying between 55 GHz and 65 GHz, and **in that** the said transmitting and receiving antennae (4, 6) are of the type with slots (F) and are integrated into the structure (2) of the said aircraft.

2. Radio altimeter according to Claim 1, for an aircraft carrying an absorbent outer coating (26) which covers over the structure (2) of the aircraft and which is capable of absorbing electromagnetic waves, **characterized in that** the said transmitting and receiving antennae (4, 6) are integrated into the said absorbent coating.

3. Radio altimeter according to one of Claims 1 and 2, **characterized in that** each of the said transmitting and receiving antennae (4, 6) includes a metal waveguide (4A, 6A) integrated into the structure (2) of the aircraft, the face (13, 14) of the said waveguide (4A, 6A) situated towards the outside being equipped with the said slots (F), and one of the ends (4B, 6B) of the said waveguide (4A, 6A) being curved towards the inside of the aircraft and linked to the said UHF head (3).

4. Radio altimeter according to Claim 3, **characterized in that** the end (4D, 6D) of the said waveguide (4A, 6A), opposite the UHF head (3), is equipped with a matched load.

5. Radio altimeter according to Claim 3, **characterized in that** the end (4D, 6D) of the said waveguide (4A, 6A), opposite the UHF head (3), is equipped with a short-circuit.

6. Radio altimeter according to one of Claims 3 to 5, **characterized in that** the segments (4C, 6C) of the two waveguides (4A, 6A), equipped with the said slots (F), are mounted in a substantially colinear fashion.

7. Radio altimeter according to one of Claims 3 to 6, **characterized in that**, for each of the said antennae (4, 6), the said slots (F) are formed in a metal foil (11) fixed onto the corresponding waveguide (4A, 6A).

8. Radio altimeter according to Claim 7, **characterized in that** the said slots (F) are formed by photolithography.

9. Radio altimeter according to one of Claims 7 and 8, **characterized in that** the said metal foil (11) is welded onto the said waveguide (4A, 6A).

10. Radio altimeter according to any one of Claims 1 to 9, **characterized in that** the said slots (F) are covered over with a leaktight film (15), produced from a material letting through the electromagnetic waves at a frequency lying between 55 GHz and 65 GHz.

11. Radio altimeter according to Claim 10, **characterized in that** the said leaktight film (15) is made of tetrafluoroethylene.

12. Radio altimeter according to any one of the preceding claims, **characterized in that** the said transmitting and receiving antennae (4, 6) are arranged in a common assembly component (18) mounted in the structure (2) of the aircraft.

13. Radio altimeter according to Claims 3 and 12, **characterized in that** the said assembly component (18) includes, on its outer face, on either side of the said waveguides (4A, 6A), straight-line grooves (25) machined into the said assembly component (18).

14. Radio altimeter according to Claims 2 and 12, **characterized in that**, in the region (27) for fitting the assembly component (18), the absorbent coating (26) is taken off and replaced by a removable hatch (28), produced from the same material as the said absorbent coating (26) and provided with an aperture (29) for the transmission and reception of electromagnetic waves by means of the said transmitting and receiving antennae (4, 6).

15. Radio altimeter according to Claim 14, **characterized in that** the said hatch (28), on the edge of the aperture (29), features bevels (30) matching the extreme directions of transmission and reception of electromagnetic waves of the said transmitting and receiving antennae (4, 6).

16. Radio altimeter according to any one of the preceding claims, **characterized in that** the said transmitting and receiving antennae (4, 6) with slots (F) behave like a flat, smooth metal facet in the case of radiation having frequencies lying outside the operating band.
